## Europäisches Patentamt
## European Patent Office
## Office européen des brevets

(19)

(11) Numéro de publication: **0 060 747**
**B1**

(12)

# FASCICULE DE BREVET EUROPEEN

(45) Date de publication du fascicule du brevet:
**02.05.85**

(51) Int. Cl.⁴: **C 03 C 17/23,** B 05 B 13/04,
C 03 C 17/25

(21) Numéro de dépôt: **82400325.5**

(22) Date de dépôt: **24.02.82**

(54) **Perfectionnement à la fabrication de verre revêtu d'un film d'oxydes métalliques.**

(30) Priorité: **26.02.81 JP 26545/81**

(43) Date de publication de la demande:
**22.09.82 Bulletin 82/38**

(45) Mention de la délivrance du brevet:
**02.05.85 Bulletin 85/18**

(84) Etats contractants désignés:
**BE DE FR IT LU NL SE**

(56) Documents cités:
**EP - A - 0 012 679**
**BE - A - 560 882**
**FR - A - 2 306 176**
**US - A - 3 819 404**

(73) Titulaire: **SAINT-GOBAIN VITRAGE, Les
Miroirs 18, avenue d'Alsace, F-92400 Courbevoie (FR)**

(72) Inventeur: **Fujimoto, Katsuji, 1-Chome, 8-56, Aobadai,
Ichibara-shi Chiba (JP)**
Inventeur: **Hisamoto, Chiharu,
1-Chome, 7 C-144, Aobadai, Ichihara-shi Chiba (JP)**
Inventeur: **Higashimura, Toshiyuki,
1-Chome, 7 C-124, Aobadai, Ichihara-shi Chiba (JP)**

(74) Mandataire: **Leconte, Jean-Gérard et al, Saint-Gobain
Recherche 39, Quai Lucien Lefranc,
F-93304 Aubervilliers Cedex (FR)**

# Description

La présente invention concerne la fabrication en continu de verre plat dont la surface est revêtue d'un film d'oxydes métalliques réfléchissant la chaleur ou le rayonnement visible.

Plus précisément, elle porte sur la fabrication de verre plat revêtu d'un film d'oxydes métalliques, permettant de réduire autant que possible l'adhésion des substances non-décomposées se trouvant dans les gaz déchets, sur les dispositifs d'évacuation des gaz, etc ... et permettant de décomposer rapidement ces substances non-décomposées qui se sont malgré tout déposées.

Jusqu'ici pour fabriquer en continu du verre plat dont la surface est revêtue d'un film d'oxydes métalliques, on fabrique d'abord un ruban de verre d'épaisseur uniforme, par exemple par flottage, ensuite on pulvérise sur sa surface maintenue à haute température une solution de composés métalliques décomposables en oxydes à la chaleur, puis on recuit le verre ainsi revêtu dans un four de recuisson.

Mais toute la solution pulvérisée ne donne pas naissance au film d'oxydes sur la surface du verre, une partie se transforme en gaz sous l'effet de la chaleur et une autre partie demeure à l'état non décomposé. Ces substances non décomposées polluent et viennent se déposer sur la surface du verre, elles empêchent d'obtenir un film de revêtement régulier et elles diminuent la résistance à l'abrasion du film déposé. On doit donc évacuer les déchets constitués par les gaz de décompostion et par les substances non décomposées.

Pour cela, on installe des dispositifs d'évacuation en amont et en aval du pulvérisateur qui évacueront les déchets à l'extérieur.

Suivant une technique, par exemple décrite dans le document FR-A-2 306 176, l'espace de pulvérisation est clos et entouré par une enveloppe à l'intérieur de laquelle sont prévus des moyens de chauffage pour maintenir une température élevée, en particulier dans la zone où s'effectue le revêtement du verre, ainsi que tous les dispositifs servant à la pulvérisation et à l'évacuation des déchets, ces dispositifs étant eux aussi portés à la température élevée, sensiblement uniforme de l'intérieur de l'enveloppe.

Suivant une autre technique par exemple décrite dans la publication de brevet EP-A-0 012 679, l'espace de pulvérisation est ouvert, facilitant notamment l'accès à l'installation et le contrôle des opérations de pulvérisation. Cependant pour éviter l'influence néfaste de l'atmosphère ambiante froide dans la zone de pulvérisation, un soufflage de gaz chauds, en général de l'air, est prévu, à l'aide de moyens de soufflage disposés à la partie supérieure de l'espace de pulvérisation, au-dessus des dispositifs d'évacuation des déchets. Dans les publications de brevets FR-A-2 211 411 et EP-A-0 051 538, il est précisé que les moyens de soufflage sont séparés des dispositifs d'évacuation des déchets par des éléments isolants.

Les déchets qui sont constitués de substances non décomposées et de gaz résultant de la décomposition des solvants et des substances actives, sont aspirés de la zone de pulvérisation et évacués par les dispositifs d'évacuation.

En maintenant une température élevée dans la zone de pulvérisation, en particulier grâce au soufflage d'air chaud, on pourrait penser que les revêtements seront de qualité et que les déchets, eux-mêmes à température élevée seront aspirés et évacués sans créer de problèmes.

Or dans le cas où la température de l'environnement est basse, par exemple environ 100 °C, même si on met en action le soufflage d'air chaud pour assurer une température élevée dans la zone de pulvérisation, on constate des défauts sur le verre, du type trous d'épingle, et en conséquence une baisse de rendement.

On a pu mettre en évidence qu'une action sur le soufflage d'air chaud limitait les dépôts de substances non décomposées à l'intérieur des dispositifs d'évacuation et sur les accessoires placés dans l'espace de pulvérisation et donc les défauts sur le verre, mais qu'il suffisait de modifier les conditions de fonctionnement de l'installation par exemple augmenter le débit de la solution de composés métalliques pour faire défiler plus vite le verre à revêtir, et/ou avoir recours à d'autres solutions de composés métalliques à pulvériser, ou augmenter le débit d'évacuation des déchets, pour que les problèmes de dépôt et donc de défauts sur le verre, se posent à nouveau.

La présente invention vise, dans une installation où l'espace de pulvérisation est ouvert, à supprimer les retombées sur le verre, de déchets s'étant préalablement déposés sur les dispositifs d'évacuation desdits déchets.

Pour cela elle propose, dans le cadre d'un procédé de fabrication de verre revêtu d'un film d'oxydes métalliques utilisant un espace de pulvérisation ouvert, de chauffer de façon préférentielle c'est à dire plus intensément les parois des dispositifs assurant l'aspiration et l'évacuation des déchets, pour d'une part rendre difficile l'adhérence des déchets, et pour d'autre part décomposer les déchets qui se seraient malgré tout déposés.

Les déchets ainsi décomposés ne tombent plus sur le verre mais sont évacués dans les dispositifs d'évacuation avec les autres gaz déchets.

Pour cela, on installe les moyens de soufflage d'air chaud dans l'espace de pulvérisation, à proximité des dispositifs d'évacuation des déchets, les rampes desdits moyens de soufflage épousant la forme des dispositifs d'évacuation, les entourant en partie et étant en contact avec eux sur une partie de leur surface, pour les maintenir à température élevée.

L'invention sera maintenant décrite avec plus de détails en référence aux dessins qui représentent:

Figure 1: une vue de côté schématique d'une installation conforme à l'invention pour fabriquer un ruban de verre plat revêtu d'un film d'oxydes métalliques,

Figure 2: une vue agrandie d'un détail de la figure 1 montant les moyens de soufflage entourant le dispositif d'évacuation des déchets,

Figures 3, 4 et 5: des vues de détail montrant trois variantes de réalisation des moyens de soufflage d'air chaud.

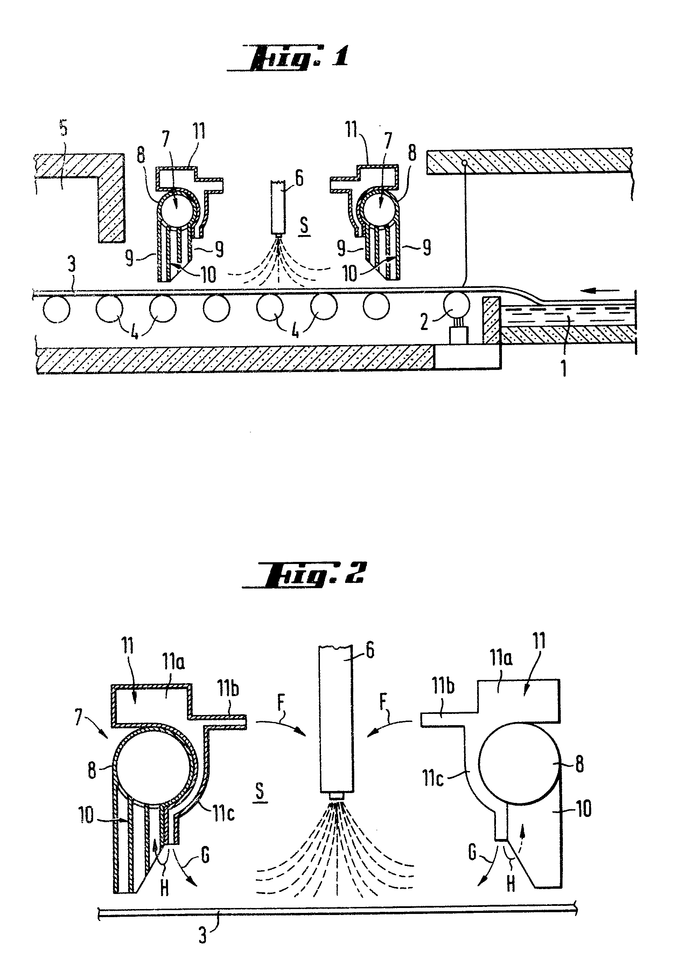

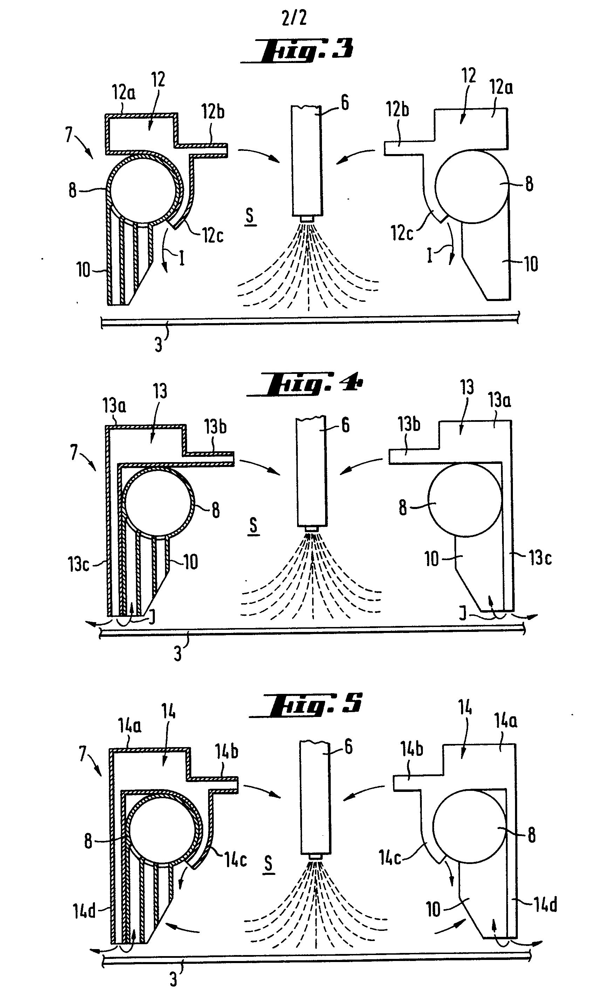

La figure 1 montre une installation générale de fabrication de verre plat revêtu d'un film d'oxydes métalliques. Du verre fondu déversé à débit constant sur un bain de métal fondu 1, avance en se refroidissant progressivement pour former une couche de verre d'épaisseur uniforme. A l'extrémité du bain 1, un rouleau 2 soulève le verre, le dégage du bain 1 et délivre un ruban de verre 3 qu'on transfère vers un four de recuisson 5 en le convoyant sur les rouleaux 4. Entre sa sortie du bain métallique 1 et son entrée dans le four de recuisson 5, le ruban de verre 3 traverse un espace S dans lequel on peut effectuer un revêtement par un film d'oxydes métalliques. Dans cet espace S est installé un pulvérisateur 6 pouvant se déplacer dans une direction perpendiculaire à la direction d'entraînement du ruban de verre, ce pulvérisateur 6 étant prévu pour pulvériser sur le verre des solutions de composés métalliques telles que acétylacétonate de fer, de titane, de chrome, dipropionylméthane de cobalt, etc. . . , et en général divers composés organométalliques décomposables à la chaleur. Des dispositifs d'évacuation des gaz 7 sont prévus en amont et en aval de la zone balayée par le pulvérisateur 6. Ils sont constitués chacun par un tuyau 8 d'évacuation des gaz relié d'un côté à un ventilateur d'aspiration non montré sur les figures, et terminé de l'autre côté par un embout d'aspiration 10 s'étendant sur toute la largeur du ruban de verre, comprenant une pluralité de cloisons verticales parallèles 9 qui délimitent plusieurs fentes d'aspiration, ces cloisons 9 descendant depuis le tuyau 8 jusqu'à la proximité de la surface du verre. Au-dessus des tuyaux d'évacuation des gaz sont dispoés des moyens de soufflage d'un gaz chaud, de l'air en général, qui suivant les figures illustrant diverses variantes de réalisation portent la référence générale 11 (figures 1 et 2), 12 (figure 3), 13 (figure 4), 14 (figure 5) et qui s'étendent sur toute la largeur de l'espace de pulvérisation.

Ces moyens de soufflage comportent chacun une gaine principale 11a figure 2), 12a (figure 3), 13a (figure 4), 14a (figure 5) alimentant une rampe de soufflage 11b (figure 2), 12b (figure 3), 13b (figure 4), 14b (figure 5) en saillie sur la gaine principale et débouchant horizontalement vers l'intérieur de l'espace de pulvérisation S et diverses autres rampes secondaires qui suivant les variantes de réalisation ont des formes et des orientations différentes.

Suivant le mode de réalisation illustré par la figure 2, la gaine principale 11a alimente, en plus de la rampe supérieure 11b, une rampe inférieure 11c dont les parois enrobent le tuyau d'évacuation 8 et descendent le long de l'embout d'aspiration 10, du côté orienté vers l'espace S pour déboucher en direction verticale vers le bas de l'espace S, près de la surface du verre. Le gaz chaud soufflé, par les moyens de soufflage, pénètre dans l'espace de pulvérisation S par les rampes supérieures 11b suivant les flèches F et par les rampes inférieures 11c suivant les flèches G et H. Une partie de ce gaz chaud soufflé sert uniquement à réchauffer l'atmosphère de l'espace de pulvérisation, une autre partie est aspirée directement par les embouts d'aspiration 10 et sert à chauffer les parois desdits embouts qui peuvent ainsi atteindre environ 200 °C.

Dans la variante de réalisation montrée figure 3, chaque gaine principale 12a alimente en plus de la rampe supérieure 12b, une rampe inférieure 12c qui enrobe en partie le tuyau 8 d'évacuation des gaz déchets. Ainsi l'air chaud soufflé par une rampe inférieure 12c suivant la flèche I chauffe la paroi de l'embout d'aspiration 10 tournée vers l'intérieur de l'espace de pulvérisation, mais également forme un rideau d'air chaud devant cette paroi, portant ainsi ladite paroi à une température élevée.

Dans la variante de réalisation montrée figure 4, chaque gaine principale 13a alimente en plus de la rampe supérieure 13b, une autre rampe inférieure 13c qui descend autour du tuyau 8 d'évacuation, puis le long de l'embout d'aspiration 10, mais à l'opposé du côté orienté vers l'espace de pulvérisation S. Dans ce cas l'air chaud est soufflé par la rampe inférieure 13c suivant la direction indiquée par la flèche J et est aspiré directement à l'intérieur de l'embout d'aspiration 10. Cet embout 10 puis le tuyau d'évacuation 8 sont donc chauffés par cet air chaud aspiré d'une part, et par leur contact avec la rampe inférieure 13c d'autre part.

Dans la variante de réalisation illustrée figure 5, une combinaison des solutions proposées figure 3 et figure 4 est réalisée. Chaque gaine principale 14a alimente en plus de la rampe supérieure 14b, d'une part une première rampe inférieure 14c enrobant en partie le tuyau d'évacuation 8 du côté de l'intérieur de l'espace de pulvérisation, et d'autre part une seconde rampe inférieure 14d descendant autour du tuyau d'évacuation 8 puis le long de l'embout d'aspiration 10, jusqu'à proximité de la surface du verre, mais du côté non tourné vers l'espace de pulvérisation.

Ainsi les dispositifs d'aspiration des gaz déchets et des substances non-décomposées en suspension dans ces gaz, sont chauffés par contact avec les rampes de soufflage d'air chaud qui les entourent des deux côtés, et par aspiration directe de l'air chaud soufflé par lesdites rampes.

D'autres variantes non détaillées ci-dessus sont également possibles, ainsi par exemple une variante combinant les solutions proposées dans la figure 2 et la figure 4.

Les dispositifs d'évacuation ont ainsi leurs parois maintenues à haute température; les substances non-décomposées n'y adhèrent que difficilement, et même si elles y adhèrent, elles se décomposent rapidement du fait de la haute température, en gaz qui sont éliminés par aspiration en même temps que les gaz déchets résultant de la décomposition thermique de la solution pulvérisée, au moment de son contact avec le verre à haute température.

Ces substances décomposées ne tombent donc plus sur la surface du verre, quel que soit le débit d'aspiration, ou le débit de pulvérisation, et on évite ainsi les défauts antérieurement constatés, en particulier les défauts en forme de trous d'épingle.

Des températures de parois des dispositifs d'évacuation de l'ordre de 200 °C et plus peuvent ainsi être atteintes et sont souhaitables pour produire le résultat attendu.

**Revendications**

1. Procédé de fabrication de verre revêtu d'un film d'oxydes métalliques dans lequel on pulvérise sur un ruban de verre à haute température une solution de composés métalliques décomposables à la chaleur en oxydes métalliques, dans lequel on aspire les déchets résultatnt de la décomposition thermique et dans lequel on utilise un espace de pulvérisation ouvert qu'on maintient à température élevée par des moyens de soufflage de gaz chaud, caractérisé en ce qu'on chauffe de façon plus intense les parois des dispositifs assurant l'aspiration et l'évacuation des déchets par contact de ces dispositifs avec les moyens de soufflage de gaz chaud.

2. Procédé selon la revendication 1, caractérisé en ce qu'une partie de gaz chaud est soufflée de façon à être aspirée directement par les dispositifs assurant l'aspiration et l'évacuation des déchets.

3. Installation de fabrication de verre revêtu d'un film d'oxydes métalliques, comprenant un espace de pulvérisation ouvert, au moins un pistolet pulvérisateur pour pulvériser sur le verre une solution de composés métalliques, des dispositifs d'aspiration et d'évacuation des déchets résultant de la décomposition thermique de la solution, des moyens de soufflage de gaz chaud, notamment de l'air, à l'intérieur de l'espace de pulvérisation, lesdits moyens de soufflage étant équipés de rampes de soufflage et montés sur les dispositifs d'évacuation, caractérisée en ce que les moyens de soufflage de gaz chaud sont dispoés à proximité des dispositifs d'évacuation des déchets, les rampes de soufflage desdits moyens de soufflage épousant la forme des dispositifs d'évacuation, les entourant en partie et étant en contact avec eux sur une partie de leur surface pour les maintenir à température élevée.

4. Installation selon la revendication 3, caractérisée en ce que au moins une rampe de soufflage est dirigée en direction de l'entrée des dispositifs d'évacuation et débouche à proximité de façon que le gaz chaud qu'elle délivre soit au moins en partie aspiré directement.

**Patentansprüche**

1. Verfahren zur Herstellung eines mit einem Metalloxidfilm überzogenen Glases, bei welchem auf ein auf hoher Temperatur befindliches Glasband eine Lösung von thermisch zu Metalloxiden zersetzbaren Metallverbindungen zerstäubt wird, die bei der thermischen Zersetzung entstehenden Abfallprodukte abgesaugt werden und ein offener Zerstäubungsraum verwendet wird, welcher durch Blaseinrichtungen für Heissgas auf einer erhöhten Temperatur gehalten wird, dadurch gekennzeichnet, dass die Wände der Vorrichtungen, welche die Absaugung und Abführung der Abfallprodukte sicherstellen, durch Kontakt dieser Vorrichtungen mit den Blaseinrichtungen für das Heissgas stärker erwärmt werden.

2. Verfahren nach Anspruch 1, dadurch gekennzeichnet, dass ein Teil des Heissgases derart eingeblasen wird, dass dieser unmittelbar durch die Vorrichtungen zum Absaugen und Abführen der Abfallprodukte abgesaugt wird.

3. Anlage zur Herstellung von mit einem Metalloxidfilm beschichtetem Glas, mit einem offenen Zerstäubungsraum, mindestens einer Zerstäubungspistole zum Zerstäuben einer Lösung von Metallverbindungen auf dem Glas, Vorrichtungen zum Absaugen und Abführen der Abfallprodukte, die bei der thermischen Zersetzung der Lösung entstehen, und mit Blaseinrichtungen für Heissgas, insbesondere Luft, im Inneren des Zerstäubungsraums, wobei die Blaseinrichtungen mit Blasdüsen versehen und auf den Absaugvorrichtungen angeordnet sind, dadurch gekennzeichnet, dass die Blaseinrichtungen für Heissgas in der Nähe der Absaugvorrichtungen für Abfallprodukte angeordnet sind und dass die Blasdüsen der Blaseinrichtungen der Form der Absaugvorrichtungen angepasst sind, diese teilweise umgeben und sich mit diesen auf einem Teil ihrer Oberfläche in Kontakt befinden, um diese auf einer erhöhten Temperatur zu halten.

4. Anlage nach Anspruch 3, dadurch gekennzeichnet, dass mindestens eine der Blasdüsen in Richtung des Einlasses der Absaugvorrichtungen gerichtet ist und derart in deren Nähe ausmündet, dass das von ihr abgegebene Heissgas wenigstens teilweise unmittelbar angesaugt wird.

**Claims**

1. Method of making glass coated with a film of metal oxides in which a solution of metal compounds capable of decomposing to yield metal oxides on heating is sprayed on to a glass ribbon at a high temperature, in which waste material resulting from the thermal decomposition is removed by aspiration and in which there is used an open spraying space which is held at elevated temperature by means for blowing hot gas, aspiration and removal of the waste material are hated more intensely by contact of these devices with the means for blowing hot gas.

2. Method according to claim 1, characterised in that part of the hot gas is blown in such a manner as to be aspirated directly by the devices effecting aspiration and removal of the waste material.

3. Apparatus for making glass coated with a film of metal oxides, comprising an open spraying space, at least one spray gun for spraying a solution of metal compounds on to the glass, devices for aspiration and removal of waste material resulting from thermal decomposition of the solution, and means for blowing hot gas such as air into the interior of the spraying space, said blowing means being provided with blowing ducts and mounted on the removal devices, characterised in that the blowing means for hot gas are arranged in the proximity of the devices for removing waste material, the blowing ducts of said blowing means having the shape of the removal devices, partly surrounding them and being in contact with them over a part of their surface area to hold them at elevated temperature.

4. Apparatus according to claim 3, characterised in that at least one blowing duct is oriented in the direction of entry of the removal devices and opens in their proximity so that the hot gas which is delivered is at least partly aspirated directly.

Fig. 1

Fig. 2

**Fig. 3**

**Fig. 4**

**Fig. 5**